# EUROPÄISCHE PATENTSCHRIFT

(11) **EP 0 445 762 B1**
(45) Veröffentlichungstag und Bekanntmachung des Hinweises auf die Patenterteilung: **07.06.1995**
(21) Anmeldenummer: 91103390.0
(22) Anmeldetag: 06.03.1991
(51) Int. Cl.: A01K 19/00

(54) **Entwöhnungsgerät für Rinder**
Weaning apparatus for cattle
Appareil pour le sevrage des bovins

(30) Priorität: 07.03.1990 DE 9002624 U
(43) Veröffentlichungstag der Anmeldung: 11.09.1991
(73) Patentinhaber: Rheintechnik Weiland & Kaspar KG Maschinenfabrik., 56170 Bendorf (DE)
(72) Erfinder: Suiter, Hubert, D-8941 Lautrach (DE)
(74) Vertreter: Quermann, Helmut, Dipl.-Ing.

(56) Entgegenhaltungen:
- DE-C- 2 735 952

## Beschreibung

Die Erfindung betrifft ein Entwöhnungsgerät für Rinder, das mit Stromstößen hoher Spannung arbeitet, am Kopf des Tieres vorzugsweise durch drei Riemen zu befestigen ist, eine Stromquelle, einen Transformator und einen Schalter aufweist und Kontakte oder dergleichen trägt, zur Einleitung von Stromstoßen in den Tierkopf, mit einem Neigungsschalter im Stromkreis für die Stromstöße, der beim Anheben der Stirn des Tieres in etwa in die Horizontale einschaltet.

Ein Entwöhnungsgerät dieser Art ist beschrieben in der DE-PS 27 35 952. Durch diese Entwöhnungsgerät sollen verschiedene unerwünschte Angewohnheiten von Kälbern und Rindern bekämpft werden. Die bekannteste unerwünschte Angewohnheit ist dabei das Saugen am Muttertier oder auch an anderen Milchkühen. Das bekannte Entwöhnungsgerät schaltet dabei die Stromstöße dann ein, wenn das Tier den Kopf anhebt, derart, daß die Stirn des Tieres etwa in die Horizontale gelangt. Diese Stellung ist die Stellung beim Saugen, aber auch bei einigen anderen unerwünschten Angewohnheiten der Tiere.

Beim bekannten Gerät ist auch ein weiterer Neigungsschalter vorgesehen, der bei übermäßiger Querneigung schaltet.

Es wurde gefunden, daß die Kopfhaltung, die den Schalter auslöst, auch bei Bewegungen oder Haltungen des Tierkopfes auftritt, die nichts mit dem Saugen zu tun haben. Werden auch hierbei Stromstöße ausgelöst, führt dies zu unnötiger Beunruhigung. Reduziert man die Stellung, die die Stromstöße auslöst, läßt sich zwar eine Verbesserung bezüglich dieser unerwünschten Nebenwirkungen erzielen, gleichzeitig wächst aber auch die Gefahr, daß das Tier in unerwünschter Weise saugt und es lernt, den Kopf so zu halten, daß die Stromstöße nicht ausgelöst werden.

Es ist Aufgabe der Erfindung, das bekannte Gerät weiter zu entwickeln und zu verbessern, um sicherzustellen, daß nur im Zusammenhang mit dem Saugen Stromstöße ausgelöst werden.

Zur Lösung dieser Ausgabe wird ausgegangen von dem Entwöhnungsgerät der eingangs angegebenen Gattung. Erfindungsgemäß wird vorgeschlagen, daß das Gerät auch einen Näherungsschalter im Stromkreis für die Stromstöße aufweist, der im Zusammenwirken mit dem Neigungsschalter dann einschaltet, wenn ein Gegenstand sich auf weniger als ca. 10 bis 15 cm Abstand dem Gerät bzw. dem Tierkopf nähert. Ein solcher Näherungsschalter kann beispielsweise einen Infrarot-Sensor umfassen, der die Infrarot-Strahlen eines Infrarot-Senders ermittelt. Es sind aber auch Näherungsschalter, die auf einer anderen physikalischen Basis arbeiten, brauchbar.

Durch den erfindungsgemäß vorgeschlagenen Näherungsschalter wird im Zusammenwirken mit dem Neigungsschalter erreicht, daß für die Auslösung der Stromstöße einerseits eine bestimmte kopfhaltung notwendig ist, andererseits das Tier aber auch sich in unmittelbarer Nähe des anderen Tieres befindet. Ist eine dieser beiden Bedingungen nicht erfüllt, werden keine Stromstöße ausgelöst. Wenn also das Tier den Kropf hebt, beispielsweise um den Kopf nur auf ein anderes Tier zu legen oder bei ähnlichen Bewegungen, bleibt der Näherungsschalter ausgeschaltet.

Im Zusammenwirken des Näherungsschalters mit dem Neigungsschalter wird erreicht, daß nur in den Fällen, in denen dies erwünscht ist, Stromstöße ausgelöst werden, in den übrigen Fällen dagegen eine Beunruhigung des Tieres unterbleibt.

Günstig ist es, wenn der Infrarot-Sender auch in das Gerät integriert ist. Bei einer Variante der Erfindung könnte auch eine getrennte Anordnung gewählt werden.

Die Erfindung schlägt ferner vor, daß der Infrarot-Sender und/oder der Infrarot-Sensor bezüglich seiner Ausrichtung verstellbar ist, derart, daß der auslösende Abstand veränderbar ist. Auf diese Weise kann das Gerät den jeweiligen individuellen Gewohnheiten angepaßt werden.

Günstig ist es, wenn alle wesentlichen elektronischen und elektrischen Bauteile auf einer Platine im Gerät angeordnet sind.

Weiter schlägt die Erfindung vor, daß Stromstöße solch hoher Spannung angewandt werden, daß der Überschlag von den Kontakten oder dergleichen zur Tierhaut auch bei einer Distanz von ca. 1 bis 2 cm erfolgt. Dies erlaubt, daß das Gerät nur auf das Fell des Tieres aufgesetzt wird, wodurch das Einwachsen in die Haut nicht zu befürchten ist.

In der Zeichnung ist ein Ausführungsbeispiel der Erfindung schematisch dargestellt. Es zeigen:
- Fig. 1: das erfindungsgemäße Gerät in der Gebrauchsstellung,

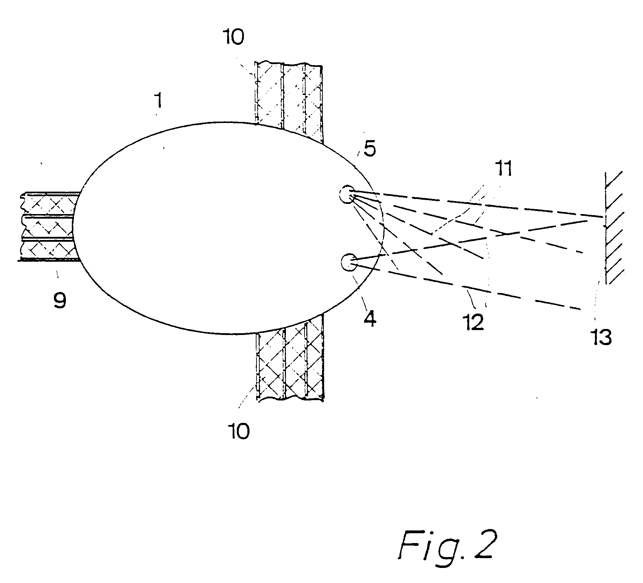

- Fig. 2: eine Draufsicht auf das erfindungsgemäße Gerät in einem anderen Maßstab, und
- Fig. 3: eine Seitenansicht zur Darstellung der Fig. 1 in einem anderen Maßstab.

Das Gerät 1 besitzt eine flache, abgerundete Form und ist durch die drei Riemen 9 und 10 am Kopf 3 des Tieres gehalten. Der Riemen 9 ist als Mittelriemen ausgebildet, während die beiden Riemen 10 als Seitenriemen dienen. Die Riemen 9 und 10 führen zu einem nicht näher dargestellten Halsriemen.

An der Vorderseite des Gerätes 1 sind Öffnungen vorgesehen, wobei die eine Öffnung dem Infrarot-Sensor 4 und die andere Öffnung dem Infrarot-Sender 5 zugeordnet ist. Der Infrarot-Sender 5 sendet Infrarot-Strahlen aus, die durch die Linien 11 angedeutet sind. Diese Strahlen sind zwar gebündelt, streuen jedoch in einem gewissen Bereich. Der Infrarot-Sensor 4 kann in einem Bereich, der durch die Linien 12 begrenzt ist, reflektierte Infrarot-Strahlen aufnehmen. Wenn nun die durch die Linien 11 angedeuteten Infrarot-Strahlen auf einen Gegenstand 13 treffen, kann der Infrarot-Sensor 4 diese Strahlen ermitteln und einen Schaltvorgang auslösen.

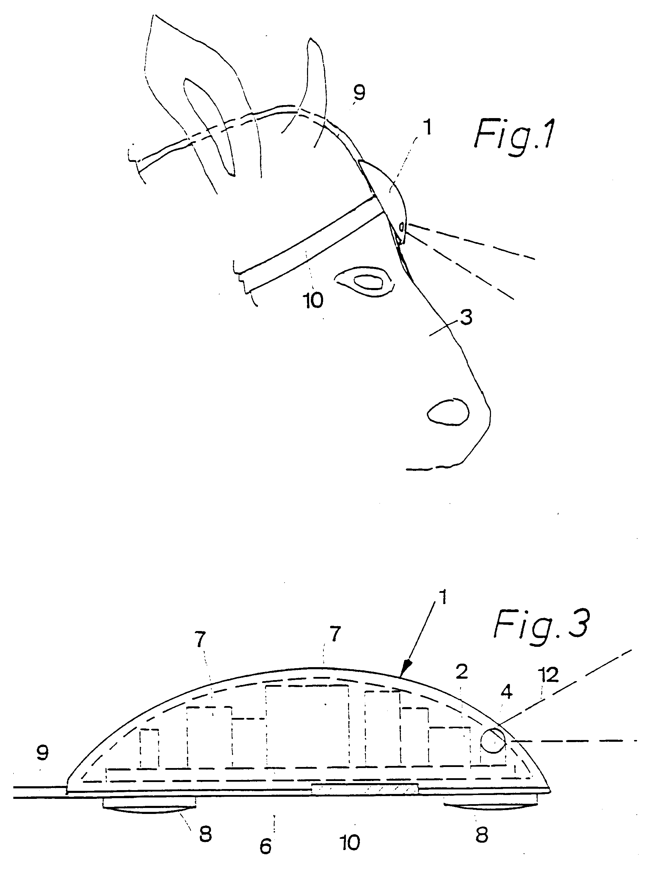

Sowohl der Sensor wie der Sender sind so ausgerichtet, daß sie nach vorne oben zielen, wie dies aus der Darstellung der Fig. 1 und 3 zu entnehmen ist. Die Ausrichtung des Senders und des Sensors können so verändert werden, daß der Abstand und auch die Höhenlage einstellbar sind. Günstige Ergebnisse sind erhalten worden, wenn die Ausrichtung derart vorgenommen wird, daß eine Annäherung des Gegenstandes 13 auf etwa 10 bis 15 cm, vorzugsweise auf 12 cm, die Schaltfunktion des Sensors 4 auslöst.

Das Gerät 1 umschließt ferner noch einen Neigungsschalter, der dann den Stromkreis schließt, wenn das Tier den Kopf so anhebt, daß die Stirn annähernd eine horizontale Lage einnimmt.

Beim praktischen Gebrauch ergibt sich dann folgendes.

Hebt das Tier nur den Kopf in die horizontale Lage, ist ein Stromstoß nicht möglich. Ein Stromstoß wird auch nicht ausgelöst, wenn das Tier mit annähernd geneigtem Kopf sich beispielsweise einem anderen Tier nähert oder auch einer Wand oder einem anderen Hindernis nahekommt. Wenn aber das Tier sich einem anderen Tier nähert und, wie dies für das Saugen notwendig ist, den Kopf anhebt, wird ein Stromstoß ausgelöst.

In dem Gerät 1 sind die einzelnen elektrischen und elektronischen Bauteile 7 auf der Platine 6 montiert. Diese Platine nimmt auch den Näherungsschalter 2 auf, der vom Sensor 4 gesteuert wird.

Auf der Unterseite des Gerätes 1 sind die plattenförmigen Kontakte 8 angeordnet, mit denen das Gerät auf dem Tierfell aufliegt. Die Kontakte 8 besitzen eine leichte konvexe Form, um scharfe Kanten zu vermeiden.

## Patentansprüche

1. Entwöhnungsgerät für Rinder, das mit Stromstößen hoher Spannung arbeitet, am Kopf des Tieres vorzugsweise durch drei Riemen zu befestigen ist, eine Stromquelle, einen Transformator und einen Schalter aufweist und Kontakte oder dergleichen trägt, zur Einleitung von Stromstößen in den Tierkopf, mit einem Neigungsschalter im Stromkreis für die Stromstöße, der beim Anheben der Stirn des Tieres in etwa in die Horizontale einschaltet, **dadurch gekennzeichnet**, daß das Gerät (1) auch einen Näherungsschalter (2) im Stromkreis für die Stromstöße aufweist, der im Zusammenwirken mit dem Neigungsschalter dann einschaltet, wenn ein Gegenstand sich auf weniger als ca. 10 bis 15 cm Abstand dem Gerät (1) bzw. dem Tierkopf (3) nähert.

2. Gerät nach Anspruch 1, dadurch gekennzeichnet, daß der Näherungsschalter einen Infrarot-Sensor (4) umfaßt, der Infrarot-Strahlen eines Infrarot-Senders (5) ermittelt.

3. Gerät nach Anspruch 2, dadurch gekennzeichnet, daß auch der Infrarot-Sender (5) in das Gerät (1) integriert ist.

4. Gerät nach Anspruch 2 oder 3, dadurch gekennzeichnet, daß die Ausrichtung des Infrarot-Senders (5) und/oder des Infrarot-Sensors (4) verstellbar ist, derart, daß der auslösende Abstand veränderbar ist.

5. Gerät nach einem oder mehreren der vorhergehenden Ansprüche, gekennzeichnet durch eine im Gerät (1) angeordnete Platine, auf der alle wesentlichen elektronischen und elektrischen Bauteile (7) montiert sind.

6. Gerät nach einem oder mehreren der vorhergehenden Ansprüche, gekennzeichnet durch Stromstöße hoher Spannung, derart, daß der Überschlag von den Kontakten (8) oder dergleichen zur Tierhaut auch bei einer Distanz von ca. 1 bis 2 cm erfolgt.

7. Gerät nach einem oder mehreren der vorhergehenden Ansprüche, gekennzeichnet durch ebene bzw. leicht konvexe, plattenförmige Kontakte (8).

## Claims

1. Weaning apparatus for cattle, which operates with current surges of high voltage, can be fastened to the head of the animal, preferably by three straps, has a current source, a transformer and a switch, and is fitted with contacts or the like, for introducing current surges into the head of the animal, having an inclination switch in the circuit for the current surges, which switch closes when the brow of the animal is raised approximately into the horizontal position, characterized in that the apparatus (1) also has a proximity switch (2) in the circuit for the current surges, which switch, in interaction with the inclination switch, closes when an object comes closer than approximately 10 to 15 cm away from the apparatus (1) or head (3) of the animal.

2. Apparatus according to Claim 1, characterized in that the proximity switch contains an infrared sensor (4) which detects infrared beams from an infrared transmitter (5).

3. Apparatus according to Claim 2, characterized in that the infrared transmitter (5), too, is integrated into the apparatus (1).

4. Apparatus according to Claim 2 or 3, characterized in that the alignment of the infrared transmitter (5) and/or of the infrared sensor (4) can be adjusted in such a way that the triggering distance can be altered.

5. Apparatus according to one or more of the preceding claims, characterized by a circuit board, which is arranged in the apparatus (1) and upon which all the essential electronic and electrical components (7) are fitted.

6. Apparatus according to one or more of the preceding claims, characterized by current surges of high voltage in such a way that the flashover from the contacts (8) or the like to the hide of the animal takes place even at a distance of approximately 1 to 2 cm.

7. Apparatus according to one or more of the preceding claims, characterized by planar or slightly convex contacts (8) in the form of plates.

## Revendications

1. Appareil pour le sevrage de veaux, utilisant des chocs électriques à haute tension, que l'on fixe à la tête de l'animal de préférence par trois courroies et qui comporte une source de courant, un transformateur et des contacts ou organes analogues, afin de générer des chocs électriques dans la tête de l'animal par l'effet d'un contacteur à inclinaison monté dans le circuit engendrant les chocs et qui fait passer le courant lorsque l'animal lève son front pour le mettre sensiblement à l'horizontal, caractérisé en ce que l'appareil (1) présente aussi, dans son circuit électrique un contacteur de proximité (2), qui, en coopération avec le contacteur d'inclinaison, fait passer le courant lorsqu'un objet s'approche à moins de 10 à 15 cm de l'appareil (1), ou de la tête (3) de l'animal.

2. Appareil selon la revendication 1, caractérisé en ce que le contacteur de proximité comprend un détecteur d'infrarouge (4) qui détecte les rayons d'un émetteur d'infrarouge (5).

3. Appareil selon la revendication 2, caractérisé en ce que l'émetteur d'infrarouge (5) est également intégré à l'appareil (1).

4. Appareil selon la revendication 2 ou 3, caractérisé en ce que l'orientation de l'émetteur d'infrarouge (5) et/ou le détecteur d'infrarouge (4) est(sont) réglable(s) de manière à permettre la variation de la distance de déclenchement.

5. Appareil selon une ou plusieurs des revendications précédentes, caractérisé en ce qu'il contient une platine sur laquelle sont montés tous les composants électriques et électroniques (7) essentiels.

6. Appareil selon une ou plusieurs des revendications précédentes, caractérisé en ce qu'il produit des chocs électriques à haute tension dont le niveau est tel que la décharge entre les contacts (8) ou organes analogues et la peau de l'animal se produit même pour une distance d'environ 1 à 2 cm.

7. Appareil selon une ou plusieurs des revendications précédentes, caractérisé en ce qu'il comporte des contacts en forme de plaques (8) planes ou légèrement convexes.
